# EUROPÄISCHE PATENTSCHRIFT

(11) **EP 2 361 499 B1**
(45) Veröffentlichungstag und Bekanntmachung des Hinweises auf die Patenterteilung: **11.07.2018**
(21) Anmeldenummer: 11156067.8
(22) Anmeldetag: 25.02.2011
(51) Int. Cl.: A01K 1/00, F24F 7/007, F24F 7/02, F24F 7/06, F24F 13/04, F24F 13/06

(54) **Zuluftkamin für Nutztierställe**
Chimney for livestock barns
Cheminée d'amenée d'air destinée à des écuries pour bétail

(30) Priorität: 26.02.2010 DE 202010002960 U
(43) Veröffentlichungstag der Anmeldung: 31.08.2011
(73) Patentinhaber: Big Dutchman International GmbH, 49377 Vechta (DE)
(72) Erfinder: Bohnes, Jörg, 49377 Vechta (DE)
(74) Vertreter: Eisenführ Speiser

(56) Entgegenhaltungen:
- DE-A1- 3 711 520
- SU-A1- 832 261
- US-A- 3 847 065
- US-B1- 6 168 517

## Beschreibung

Die Erfindung betrifft einen Zuluftkamin zur Belüftung von Nutztierställen, umfassend: eine Außenlufteinlassöffnung, eine Luftaustrittsöffnung, einen Luftkanal, welcher sich entlang einer Längsachse des Zuluftkamins erstreckt und die Außenlufteinlassöffnung mit der Luftaustrittsöffnung verbindet, mit einem ersten Luftkanalabschnitt, der sich in Strömungsrichtung der Außenluft von der Außenlufteinlassöffnung zu einer Stalllufteinlassöffnung erstreckt und einem zweiten Luftkanalabschnitt, der sich in Strömungsrichtung von der Stalllufteinlassöffnung zu der Luftaustrittsöffnung erstreckt, einen Luftförderer, der innerhalb des zweiten Luftkanalabschnitts angeordnet ist und zur Förderung von Luft aus der Stalllufteinlassöffnung und dem ersten Luftkanalabschnitt zu der Luftaustrittsöffnung ausgebildet ist. Ein weiterer Aspekt der Erfindung ist ein Modulsystem zur Montage eines solchen Zuluftkamins und ein Verfahren zum Betrieb eines solchen Zuluftkamins.

Zuluftkamine werden dazu eingesetzt, um Nutztierställe oder andere landwirtschaftlich genutzte Gebäude mit frischer Luft zu versorgen. Zu diesem Zweck wird der Zuluftkamin in eine Öffnung im Dach des Gebäudes eingesetzt oder an das untere Ende eines Schachtes oder Kanals, der durch das Dach des Gebäudes hindurchreicht, angeschlossen. Am unteren Ende des Zuluftkamins sitzt eine Luftfördereinrichtung, welche Außenluft durch den Zuluftkamin von außen ansaugt und in den Stall hineinbefördert. Der Zuluftkamin der genannten Bauart dient weiterhin dazu, Luft im Innenraum des Nutztierstalls bzw. Gebäudes zu zirkulieren. Zu diesem Zweck weist der Zuluftkamin eine Eintrittsöffnung für Stallluft auf, welche typischerweise als Eintrittsspalt ausgebildet ist und es der Stallluft ermöglicht, in Strömungsrichtung vor der Luftfördereinrichtung in den innenraum des Zuluftkamins einzutreten.

Das Verhältnis von Außenluft zur Stallluft, die durch die Luftfördereinrichtung gefördert wird, kann durch Verstellen der ersten Drosselvorrichtung eingestellt oder geregelt werden. Wird die erste Drosselvorrichtung vollständig geschlossen, so wird ausschließlich Stallluft durch die Luftfördereinrichtung gefördert und folglich eine ausschließliche Zirkulationswirkung erzielt. Wird die erste Drosselvorrichtung vollständig geöffnet, so wird das Verhältnis zwischen Außenluft und Stallluft, welches durch die Luftfördereinrichtung gefördert wird, maximiert und ein konstruktiv durch den Querschnitt der Stalllufteinlassöffnung und den Querschnitt, der durch die erste Drosselvorrichtung freigegeben wird, bestimmtes Verhältnis von Außenluft zu Stallluft durch die Luftfördereinrichtung gefördert.

Zuluftkamine der genannten Bauart weisen den Vorteil auf, dass sie eine robuste Bauweise haben, weil die dem Außenluftstrom ausgesetzte erste Drosselvorrichtung als robuste Drosselklappe ausgeführt ist, deren Bewegung durch Verschwenkung der einzigen Drosselklappe um eine zentrale Achse in der Regel auch unter widrigen Umgebungsbedingungen ausgeführt werden kann. Zuluftkamine dieser Bauweise haben sich daher für den Einsatz in der mechanisch hoch beanspruchenden Umgebung von Nutztierställen weitestgehend durchgesetzt und gelten als zuverlässig.

Aus WO 84/01615 ist eine Lüftungsanlage für Stallgebäude bekannt. Bei dieser Lüftungsanlage ist die Luftfördereinrichtung in Strömungsrichtung vor einer als Verschluss- und Verteilungsvorrichtung dienenden horizontalen Ventilplatte angeordnet, die mittels einer Federbelastung in eine geschlossene Stellung gedrückt und durch den Luftzug durch den Kamin geöffnet wird. Diese Ausgestaltung weist den Nachteil auf, dass die von außen einströmende, gegebenenfalls sehr kalte Außenluft unmittelbar aus dem Zuluftkamin austritt und hierdurch zu Erkrankungen der Nutztiere im Stallgebäude führen kann.

Aus DE 20 2006 009 501 U1 ist ein weiterer Zuluftkamin für Stallgebäude bekannt. Bei dieser Vorrichtung ist innerhalb des Zuluftkamins eine Konvektorvorrichtung zwischen Lufteinlass- und Luftauslassöffnung vorgesehen, um die Außenluft vor Einströmen in den Stallinnenraum zu temperieren. Diese Vorrichtung erfordert daher den Einsatz von Energie, um eine für das Klima im Stallinnenraum geeignete Temperatur der zugeführten Luft herzustellen.

Grundsätzlich werden mit Stallbelüftungsvorrichtungen nach dem Stand der Technik für Normalverhältnisse genügende Belüftungsbedingungen in einem Stallinnenraum erzielt. Es wird jedoch als nachteilig beobachtet, dass bekannte Zuluftkamine bei sehr niedrigen Außentemperaturen zur Vereisung neigen. Diese Vereisung tritt im Inneren des Zuluftkamins auf und kann dazu führen, dass die Betätigung von Stellorganen, insbesondere der Drosselklappe, eingeschränkt oder unmöglich ist. Es wurden auch Vereisungen und Schnee- oder Eisbildung im Innenraum von Zuluftkaminen beobachtet, die zu einem vollständigen Verschluss des Zuluftkamins geführt haben und folglich eine Belüftung des Stallinnenraums vollständig verhindert haben. Aus US 6,168,517 B1 ist ein Zuluftkamin zur Belüftung von einem Großraum bekannt gemäß dem Oberbegriff von Anspruch 1.

Aus SU 832261 A1 ist ein Zuluftkamin bekannt, die eine Drosselvorrichtung mit einer Drosselklappe, die zwischen einer ersten Stellung, in der sie den ersten Luftkanalabschnitt absperrt in eine zweite Stellung, in der sie den ersten Luftkanalabschnitt freigibt bewegbar ist.

Aus DE 3711520 A1 ist ein Zuluftkamin mit einer Drosselvorrichtung bekannt, wobei die durch die Drosselvorrichtung hindurchtretende Luft in eine schraubenförmige Bewegung um eine Längsachse des Zuluftkamins versetzt wird.

Aufgabe der vorliegenden Erfindung ist es, einen Zuluftkamin bereitzustellen, der auch bei tiefen Außentemperaturen zuverlässig funktioniert und bei dem die Funktion beeinträchtigende Schnee- oder Eisbildungen verhindert werden.

Diese Aufgabe wird erfindungsgemäß gelöst durch eine erste Drosselvorrichtung, die eine Drosselklappe umfasst, die zwischen einer ersten Stellung, in der sie den ersten Luftkanalabschnitt absperrt in eine zweite Stellung, in der sie den ersten Luftkanalabschnitt freigibt, bewegbar, insbesondere verschwenkbar ist, und eine zweite Drosselvorrichtung, die in dem ersten Luftkanalabschnitt in Strömungsrichtung hinter der ersten Drosselvorrichtung angeordnet ist und zumindest ein oder mehrere Luftleitelemente umfasst, die in einer ersten Stellung angeordnet sind, um die durch die zweite Drosselvorrichtung hindurchtretende Luft in eine schraubenförmige Bewegung um die Längsachse des Zuluftkamins zu versetzen.

Mit dem erfindungsgemäßen Zuluftkamin wird eine Lösung bereitgestellt, welche zuverlässig eine funktionsbeeinträchtigende Schnee- oder Eisbildung im Innenraum des Zuluftkamins verhindert. Diese Wirkung wird erzielt, indem einerseits eine hinsichtlich ihrer Betätigung robuste und gegen Verschmutzung und Eisbildung unempfindliche Drosselvorrichtung in Form einer Drosselklappe eingesetzt wird, um den Zustrom von Außenluft durch den ersten Luftkanalabschnitt zu regulieren. Damit wird hinsichtlich des erforderlichen Regelorgans auf eine spezifische Ausführung zurückgegriffen, die prinzipiell hinsichtlich ihrer Betätigung robust gegenüber äußeren Einflüssen konstruiert ist. Die Drosselklappe kann insbesondere schwenkbar im Innenraum des Zuluftkamins angeordnet und gelagert sein. Mit einer solchen Kinematik wird einerseits eine gute Regelbarkeit, andererseits sowohl ein vollständiger Verschluss als auch eine praktisch vollständige Freigabe des Durchtrittsquerschnitts des Zuluftkamins ermöglicht.

Erfindungsgemäß ist weiterhin eine zweite Drosselvorrichtung vorgesehen. Diese zweite Drosselvorrichtung liegt in Strömungsrichtung hinter der ersten Drosselvorrichtung, ist jedoch ebenfalls im ersten Luftkanalabschnitt, d.h. vor dem Stalllufteinlassspalt, angeordnet. Mit der zweiten Drosselvorrichtung wird einerseits eine Druckdifferenz über den Strömungsweg der zugeführten Außenluft erzeugt. Darüber hinaus ist die zweite Drosselvorrichtung mit zumindest einer, vorzugsweise mehreren Luftleitelementen bestückt, welche die zugeführte Außenluft in eine schraubenförmige Strömungsbewegung versetzen. Hierdurch wird hinter der zweiten Drosselvorrichtung eine Drallbewegung in der Strömung erzeugt, die zu einer Verwirbelung der Außenluft führt. Dieser Effekt führt zu einer wirksamen Herabsetzung der Schnee- und Eisbildung im Innenraum des Zuluftkamins.

Der Erfindung liegt die Erkenntnis des Erfinders zugrunde, dass bei bekannten Zuluftkaminen hinter der Drosselvorrichtung klar ausgeprägte Strömungswege der Außenluft auftreten, die nicht den gesamten Querschnitt des Innenraums des Zuluftkamins einnehmen. Treffen diese klar abgegrenzten Strömungswege, die kalte, aber im Regelfall auch trockene Außenluft führen, auf die durch die Stalllufteinlassöffnung eintretende Stallluft, so bilden sich hierdurch Wirbel aus, in denen die Außenluft und die Stallluft zunächst getrennt voneinander geführt werden. Dies hat zur Folge, dass die Außenluft zu einer signifikanten Herabsetzung der Temperatur der Stallluft in dieser Wirbelzone führt. Aus der in der Regel jedoch nahe dem Sättigungspunkt mit Wasser beladenen Stallluft fallen jedoch unter dieser Abkühlung Schnee- und Eiskristalle aus. Dieser Effekt ist ein erster Umstand, der zur Funktionsbeeinträchtigung durch Schnee- und Eisbildung führt.

Als zweiter Umstand ist die Strömungsdynamik vom Erfinder identifiziert worden, die in Strömungsrichtung hinter der Drosselvorrichtung bekannter Zuluftkamine entsteht. Diese Strömungsverhältnisse führen aufgrund der Wirbelbildung dazu, dass die Mischzone, die zwar prinzipiell im Bereich der Stalllufteinlassöffnung und in Strömungsrichtung dahinter, d.h. im zweiten Luftkanalabschnitt, liegen soll, sich tatsächlich entgegen der konstruktiv geplanten Strömungsrichtung zumindest partiell in den ersten Luftkanalabschnitt hineinverlagert. Dies hat zur Folge, dass feuchtigkeitsgesättigte Stallluft in einem unmittelbar an die erste Drosselvorrichtung angrenzenden Bereich und sogar in Bereiche bei und in Strömungsrichtung vor dieser ersten Drosselvorrichtung in einen Wärme austauschenden Kontakt mit der kalten Außenluft und kalten Strukturen des Zuluftkamins tritt und hierdurch in diesen Bereichen Schnee- und Eiskristalle ausfällt. Diese Schnee- und Eiskristalle schlagen sich unmittelbar in diesen Bereichen im Innenraum des Zuluftkamins nieder und können zu einer schnellen Funktionsbeeinträchtigung und Verstopfung der Drosselvorrichtung führen.

Diese so erkannten Effekte werden erfindungsgemäß überwunden und hierdurch ein funktionssicherer Betrieb auch bei tiefen Außentemperaturen erzielt. Durch die erfindungsgemäß vorgesehene zweite Drosselvorrichtung mit ihrer speziellen Ausbildung zur Erzeugung eines Dralls in der in dem Mischbereich mit der Stallluft eintretenden Außenluft wird eine Vermischung und ein Wärmeaustausch zwischen Außenluft und Stallluft in der auch konstruktiv vorgesehenen Mischzone im Bereich hinter der zweiten Drosselvorrichtung sichergestellt. Die schraubenförmige bzw. Drall-Bewegung der Außenluft vermeidet einerseits eine Ausbildung ausgeprägter und klar getrennter Strömungspfade der kalten Außenluft und bewirkt hierdurch eine rasche Vermischung mit Wärmeaustausch zwischen Außenluft und Stallluft in der Mischzone. Zum anderen wird durch die Drallbewegung ein ausreichend langer Kontaktpfad zwischen Außenluft und Stallluft in der konstruktiv vorgesehenen Mischzone erzielt, wodurch ein ausreichender Wärmeaustausch innerhalb der Mischzone stattfinden kann. Schließlich wird mit der erfindungsgemäßen Lösung vermieden, dass abgekühlte Stallluft in Kontakt mit Teilen des ersten Luftkanalabschnitts kommt und sich hierdurch Schnee, Eis oder Kondenswasser auf diesen Teilen ablagern. Dies wird erzielt, indem die Stallluft zuverlässig in einen in Strömungsrichtung hinter dem ersten Luftkanalabschnitt liegenden Bereich geführt und Rückströmungswirbel oder -bewegungen der Stallluft, die durch klar ausgeprägte Strömungswege der Außenluft erzeugt werden, vermieden werden.

Grundsätzlich ist zu verstehen, dass die Zusammenwirkung der ersten und zweiten Drosselvorrichtung solcherart ausgestaltet ist, dass beide Drosselvorrichtungen die gewünschte Gesamtdrosselwirkung im Strömungspfad erzielen und folglich für die Auslegung eine Gesamtbetrachtung der summierten Drosselwirkungen erforderlich ist. Dabei ist weiterhin zu verstehen, dass eine weitere Wirkung der zweiten Drosselvorrichtung, die Erzeugung eines schraubenförmigen Strömungspfades, durch prinzipiell verschiedene aerodynamische Maßnahmen erreicht werden kann. Insbesondere sind hierbei ein oder mehrere Schaufelelemente vorzusehen, die beispielsweise sich von einer zentralen Befestigung ausgehend nach radial außen erstrecken können oder die auch an der Wandung des Zuluftkamins befestigt sein können und sich von dort aus radial nach innen erstrecken können. Prinzipiell sind zur Erzielung der erfindungsgemäßen Funktion alle Anordnungsweisen und Ausrichtungsmöglichkeiten von aerodynamisch wirksamen Luftleitelementen einsetzbar, die eine entsprechend schraubenförmige Bewegungsform und hierdurch eine Durchbrechung der klar ausgeprägten Strömungswege der kalten Außenluft in der Mischzone bewirken.

Grundsätzlich ist zu verstehen, dass die Drosselklappe verschwenkbar, verschiebbar oder in anderer Weise verstellbar sein kann zwischen der ersten und zweiten Stellung. Dabei ist in bevorzugten Ausführungsformen eine stufenlose Verstellung oder eine diskrete, zwischen den beiden Stellungen oder mehreren Zwischenstellungen mögliche Verstellbarkeit bevorzugt. Insbesondere ist es bevorzugt, dass die Drosselklappe aus der ersten in die zweite Stellung um eine Achse schwenkbar gelagert ist, die senkrecht zur Luftströmungsrichtung durch den ersten Luftkanalabschnitt verläuft. Diese Achse kann sich mit der Längsachse des Luftkanals schneiden oder exzentrisch zu dieser angeordnet sein. Mit dieser Ausgestaltung wird eine besonders robuste und wirksame erste Drosselvorrichtung bereitgestellt, die durch eine Schwenkbetätigung einer einzigen Drosselklappe eine wirksame Dosierung des Zustroms von Außenluft durch den ersten Luftkanalabschnitt bewirkt.

Noch weiter ist es bevorzugt, dass jedes Luftleitelement aus der ersten Stellung in eine zweite Stellung verschwenkbar ist, in welcher der Strömungswiderstand der zweiten Drosselvorrichtung geringer ist als in der ersten Stellung. Während grundsätzlich das eine oder die mehreren Luftleitelemente auch als starre Elemente vorgesehen sein können und hierdurch aufgrund einer fehlenden Betätigbarkeit als besonders frostunempfindlich ausgeführt werden können, ist es für eine universelle Einsetzbarkeit des erfindungsgemäßen Zuluftkamins bei sowohl kalten wie auch gemäßigten Außentemperaturen bevorzugt, wenn die Luftleitelemente aus einer ersten in eine zweite Stellung verschwenkt werden können. Dabei kann insbesondere vorgesehen sein, dass die Luftleitelemente nur in der ersten Stellung die schraubenförmige Strömung erzeugen, dies aber in der zweiten Stellung nicht oder nur vermindert tun. Hierdurch wird eine erste Stellung, die auch als Winterstellung bezeichnet werden kann, bereitgestellt, die eine Drosselwirkung und eine ausgeprägte schraubenförmige Strömung entwickelt. Dies ist bei kalten Außentemperaturen in zweierlei Hinsicht von Vorteil. Zum einen wird die bei kalten Außentemperaturen ohnehin gewünschte verminderte Zufuhr von Außenluft in den Stall nun durch eine zweistufige Drosselung in einerseits der ersten, andererseits der zweiten Drosselvorrichtung bewirkt, was große lokale Druckdifferenzen und damit verbundene mögliche Ausfällungsreaktionen vermindert. Zum anderen wird eine ausgeprägte schraubenförmige Strömungsführung im Mischbereich erzeugt und hierdurch eine intensive und über eine lange Strömungslänge bewirkte Vermischung und einen Wärmeaustausch zwischen Außenluft und Stallluft im Mischbereich erzielt. In der zweiten Stellung, die auch als Sommerstellung bezeichnet werden kann, ist diese, für eine eisbildungsvermeidende Wirkung erforderliche Strömungsführung mit Drall nicht erforderlich und stattdessen eine möglichst hohe Durchsatzleistung, d.h. ein möglichst geringer Strömungswiderstand durch den ersten Luftkanalabschnitt wünschenswert. In dieser zweiten Stellung entwickelt die zweite Drosselvorrichtung daher eine möglichst geringe Drosselwirkung und versetzt die Außenluft nicht in eine schraubenförmige Strömungsbewegung im Mischbereich.

Dabei ist es besonders vorteilhaft, dass das Hin- und Herschalten zwischen der ersten und zweiten Stellung der zweiten Drosselvorrichtung nicht für den operativen Regelbetrieb des Zuluftkamins erforderlich ist, sondern lediglich als Grundeinstellung für einen Betriebszustand bei kalten Außentemperaturen oder bei normalen bzw. gemäßigten Außentemperaturen benötigt wird. D.h., dass die der möglichen Eisbildungszone benachbarte zweite Drosselvorrichtung und deren Verstellmechanik nicht für eine zuverlässige Funktion eine laufende Betätigungsmöglichkeit erfordert. Stattdessen ist die zweite Drosselvorrichtung während des gesamten Winterbetriebs bei kalten Außentemperaturen ausschließlich in der ersten Stellung und wird nur nach Abschluss der kalten Jahreszeit in die zweite Stellung umgestellt, wenn jedoch eine etwaige Eisbildung im Bereich der Verstellmechanik der zweiten Drosselvorrichtung bereits vollständig aufgelöst ist. Vor Beginn der kalten Jahreszeit erfolgt dann wiederum eine Zurückstellung der zweiten Drosselvorrichtung in die erste Stellung zu einem Zeitpunkt, wo noch keine Eisbildung im Bereich des Zuluftkamins und der Verstellmechanik der zweiten Drosselvorrichtung erfolgt ist. Demgegenüber wird die Regelungs- oder Verstellmöglichkeit der ersten Drosselvorrichtung, die für den operativen Betrieb des Zuluftkamins jederzeit gewährt sein muss, durch diese Verstellmöglichkeiten der zweiten Drosselvorrichtung sichergestellt und eine Beeinträchtigung der Funktion der ersten Drosselvorrichtung durch Eisbildung zuverlässig verhindert.

Noch weiter ist es bevorzugt, dass die Luftleitelemente der zweiten Drosselvorrichtung als Luftleitklappen ausgebildet sind und sich ausgehend von der Längsachse des Zuluftkamins in einer Ebene senkrecht zur Längsachse radial zur Wandung des Luftkanals erstrecken. Mit dieser Ausgestaltung wird eine sternförmige Anordnung der Luftleitklappen um die Mittellängsachse des Zuluftkamins bereitgestellt. Grundsätzlich ist zu verstehen, dass es bei der Erfindung bevorzugt ist, den Zuluftkamin mit einem runden Querschnitt auszugestalten. In anderen Ausführungsformen sind jedoch auch andere Querschnittsformen, beispielsweise rechteckige oder mehreckige Querschnittsformen vorteilhaft. Jede Luftleitklappe kann sich hierbei insbesondere von einem Befestigungspunkt im Bereich der Längsachse des Zuluftkamins zu einem Befestigungspunkt im Bereich der Außenwandung des Zuluftkamins erstrecken. Die Luftleitklappen können hierbei in einer übereinstimmenden Querschnittsebene angeordnet sein oder in Strömungsrichtung gestaffelt zueinander angeordnet sein.

Dabei ist es besonders bevorzugt, wenn jede Luftleitklappe um jeweils eine radial verlaufende Achse aus der ersten Stellung in eine zweite Stellung verschwenkbar ist, in welcher der Strömungswiderstand der zweiten Drosselvorrichtung geringer ist als in der ersten Stellung. Hierdurch wird eine einfache Verstellbarkeit einer Luftleitklappe bereitgestellt, die beispielsweise durch eine im Bereich der Mittellängsachse des Luftleitkanals angeordnete Mechanik für eine oder mehrere, insbesondere jede Luftleitklappe bereitgestellt sein kann. Die Luftleitklappen können hierbei insbesondere von einer ersten Stellung, in der sich ihre Oberfläche schräg zur Strömungsrichtung der Außenluft durch den ersten Luftkanalabschnitt erstreckt, in eine zweite Stellung, in der die Oberfläche der Luftleitklappen parallel zu dieser Strömungsrichtung liegt, verschwenkt werden. Hiermit wird eine durch sternförmig angeordnete Luftleitklappen gebildete zweite Drosselvorrichtung bereitgestellt, die in einer wirksamen Weise die gewünschte Drallwirkung in dem Strömungsweg im Mischbereich und Drosselwirkung erzeugen kann und zugleich eine einfache Verstellung in eine Sommerstellung mit geringem Strömungswiderstand ermöglicht.

Dabei ist es noch weiter bevorzugt, wenn sich jedes Luftleitelement von innen nach radial außen in seiner Breite vergrößert. Mit einer solchen, Tortenstück-ähnlichen Geometrie wird die aerodynamische Wirkung der Luftleitelemente über den gesamten Querschnitt des Luftleitkanals gut nutzbar.

Noch weiter ist es bevorzugt, den erfindungsgemäßen Zuluftkamin fortzubilden durch eine Luftleitplatte, die in Strömungsrichtung hinter der Luftauslassöffnung angeordnet ist und die durch den zweiten Luftkanalabschnitt strömende Luft nach radial auswärts, vorzugsweise nach allseitig radial auswärts umlenkt. Eine solche Luftleitplatte, die insbesondere auch mehrere senkrecht stehende und sich radial erstreckende Luftleitwände auf ihrer zur Luftaustrittsöffnung weisenden Seite aufweisen kann, wird die in den Stall eintretende Luft in eine horizontale Strömungsbewegung oder eine gegenüber der Horizontalen leicht schräge Strömungsbewegung umgelenkt und hierdurch wirksam über die Grundfläche oder einen zu belüftenden Grundflächenbereich des Stallgebäudes verteilt.

Alternativ hierzu kann der erfindungsgemäße Zuluftkamin fortgebildet werden durch eine Luftverteilervorrichtung, die in Strömungsrichtung hinter der Luftauslassöffnung angeordnet ist und die durch den zweiten Luftkanalabschnitt strömende Luft in eine Vielzahl von Luftleitrohren verteilt. Diese Ausführungsform eignet sich dafür, den erfindungsgemäßen Zuluftkamin zur gezielten Belüftung bestimmter Stellen oder Systeme innerhalb eines Stallgebäudes oder eines anderen landwirtschaftlichen Gebäudes einzusetzen, beispielsweise zur gezielten Belüftung von Haltungssystemen für Nutztiere, beispielsweise zur Kotbandbelüftung in Volierensystemen zur Geflügelhaltung.

Eine weitere Fortbildung des erfindungsgemäßen Zuluftkamins weist einen Luftmischbereich auf, der innerhalb der Stalllufteinlassöffnung angeordnet ist und in den Außenluft aus dem ersten Luftkanalabschnitt durch die zweite Drosselvorrichtung in axialer Richtung einströmen kann, wobei die Stalllufteinlassöffnung vorzugsweise als ringförmiger Spalt ausgebildet ist, durch den Stallluft radial einwärts in den Luftmischbereich eintreten kann und dort mit der Außenluft aus dem ersten Luftkanalabschnitt vermischt wird. Mit dieser Ausgestaltung wird eine für eine zuverlässige Vermeidung von Schnee- und Eisbildung vorteilhafte Platzierung des Luftmischbereichs erzielt und eine allseitige Einströmung von Stallluft in diesen Luftmischbereich ermöglicht. Dabei ist zu verstehen, dass die als ringförmiger Spalt ausgebildete Stalllufteinlassöffnung durch konstruktiv bedingte Strukturen, welche den ersten Luftkanalabschnitt mit dem zweiten Luftkanalabschnitt mechanisch verbinden, unterbrochen werden kann, ohne hierbei von der Funktions- und Gestaltungsweise abzuweichen. Der Einlassspalt kann insbesondere um 360° umlaufend ausgeführt sein und sich als umlaufendes Einlassfenster in einer zylindrischen Außenwandung des Zuluftkamins darstellen.

Dabei ist es besonders bevorzugt, wenn die Querschnittsabmessungen des ersten Luftkanalabschnitts übereinstimmend sind mit denjenigen des zweiten Luftkanalabschnitts, beispielsweise also erster und zweiter Luftkanalabschnitt den gleichen Durchmesser aufweisen. In bestimmten Ausführungsformen kann es jedoch auch vorteilhaft sein, wenn diese Abmessungen unterschiedlich sind, beispielsweise der zweite Luftkanalabschnitt größere Abmessungen, insbesondere einen größeren Durchmesser als der erste Luftkanalabschnitt hat.

Noch weiter ist es bevorzugt, wenn die Stalllufteinlassöffnung zwischen einer Auslassöffnung des ersten Luftkanalabschnitts und einer Einlassöffnung des zweiten Luftkanalabschnitts angeordnet ist. Bei dieser Ausgestaltung sind erster und zweiter Luftkanalabschnitt sowohl im Erscheinungsbild als auch funktionell voneinander getrennt und weisen eine entsprechende Auslassöffnung für Außenluft in dem Mischbereich und eine Einlassöffnung für die vermischte Stall- und Außenluft aus dem Mischbereich auf. Dabei ist zu verstehen, dass sich der Mischbereich auch in den zweiten Luftkanalabschnitt erstrecken kann. Weiterhin ist zu verstehen, dass erster und zweiter Luftkanalabschnitt gleichwohl als konstruktiv zusammenhängende Baueinheit ausgeführt sein können, beispielsweise indem die beiden Luftkanalabschnitte durch entsprechende Streben, Seile oder dgl. miteinander verbunden sind.

Schließlich ist es noch weiter bevorzugt, wenn der Luftförderer einen Ventilator und einen den Ventilator in eine Rotationsbewegung um eine parallel, vorzugsweise koaxial zur Längsachse des Zuluftkamins liegende Rotationsachse versetzenden Motor umfasst, der in Strömungsrichtung hinter oder in der Ebene, in welcher der Ventilator rotiert, angeordnet ist. Mit dieser Ausgestaltung wird eine besondere Anordnungsweise und Ausgestaltung des Luftförderers definiert, die sich als besonders schmutzunempfindlich für den genannten Einsatzzweck herausgestellt hat. Durch das Versetzen des Motors in Strömungsrichtung hinter oder in die Rotationsebene des Ventilators wird der Motor von der Mischzone zwischen Außen- und Stallluft durch diese Rotationsebene getrennt und hierdurch aus einer Eisbildungszone konstruktiv herausgelöst. Weiterhin kann bei dieser Ausgestaltung auch eine erleichterte Abfuhr von Reinigungsmitteln, die in das Innere des Zuluftkamins im Rahmen einer Hochdruckreinigung oder dgl. gelangen, sichergestellt werden.

Ein weiterer Aspekt der Erfindung ist ein Modulsystem für einen Zuluftkamin, umfassend ein erstes Luftkanalabschnittelement, ein zweites Luftkanalabschnittelement, das mittels Verbindungselementen mit dem ersten Luftkanalabschnitt so mechanisch verbunden werden kann, dass zwischen dem ersten und zweiten Luftkanalanschnittelement eine Stalllufteinlassöffnung ausgebildet ist, einen Luftförderer, der innerhalb des zweiten Luftkanalabschnitts angeordnet ist und zur Förderung von Luft aus der Stalllufteinlassöffnung und dem ersten Luftkanalabschnitt zu der Luftaustrittsöffnung ausgebildet ist, welches dadurch fortgebildet ist, dass das erste Luftkanalabschnittelement ausgebildet ist, um in seinem Innenraum eine erste Drosselvorrichtung, die eine Drosselklappe umfasst, die zwischen einer ersten Stellung, in der sie den ersten Luftkanalabschnitt absperrt in eine zweite Stellung, in der sie den ersten Luftkanalabschnitt freigibt bewegbar, insbesondere verschwenkbar ist, und eine zweite Drosselvorrichtung, die in dem ersten Luftkanalabschnitt in Strömungsrichtung hinter der ersten Drosselvorrichtung angeordnet ist und eine Mehrzahl von Luftleitelementen umfasst, die in einer ersten Stellung angeordnet sind, um die durch die zweite Drosselvorrichtung hindurchtretende Luft in eine schraubenförmige Bewegung um die Längsachse des Zuluftkamins zu versetzen, aufzunehmen.

Grundsätzlich werden Zuluftkamine der eingangs genannten Bauweise auf individuelle Bauweisen von Stallgebäuden angepasst und entsprechend dimensioniert. Dabei ist es vorteilhaft, wenn diese Anpassung und Dimensionierung durch Auswählen entsprechender Bauteile aus einem modularen Bausystem erfolgen kann. Erfindungsgemäß wird ein solches modulares Bausystem bereitgestellt, welches darüber hinaus auch eine Anpassung an tiefe Außentemperaturen ermöglicht. Zu diesem Zweck wird ein erster Luftkanalabschnitt bereitgestellt, der zur Ausrüstung mit einer zweiten Drosselvorrichtung ausgestaltet ist, welche die zuvor erläuterten Wirkungsweisen entfalten kann. Dabei ist zu verstehen, dass die erfindungsgemäßen Vorteile auch erzielt werden können, wenn der erste Luftkanalabschnitt in einer für die Erfindung wesentlichen Weise so ausgebildet ist, dass die entsprechende Platzierung und Aufnahme einer zweiten Drosselvorrichtung möglich ist, um diese zweite Drosselvorrichtung gegebenenfalls am Einsatzort separat einbauen zu können, gegebenenfalls auch nur zu Beginn der kalten Jahreszeit einzubauen und danach wieder zu demontieren. Erfindungsgemäß kann weiterhin im modularen Bausatzsystem ein Drosselmodul vorgesehen sein, welches als zweite Drosselvorrichtung eingesetzt werden kann und entsprechend in die Aufnahme im ersten Luftkanalabschnitt eingesetzt werden kann.

Dabei ist es insbesondere bevorzugt, wenn das erste Luftkanalabschnittelement eine Austrittsöffnung aufweist, durch welche Luft aus dem ersten Luftkanalabschnittelement in einen von der Stalllufteinlassöffnung umgebenen Luftmischraum strömt und eine solche Länge aufweist, dass zwischen dem Verschwenkungsbereich ersten Drosselvorrichtung und der Querschnittsebene der Austrittsöffnung die zweite Drosselvorrichtung eingebaut werden kann. Mit dieser Fortbildung wird das modulare Bausystem fortgebildet, um eine besonders wirksame Vermeidung der Schnee- oder Eisbildung in funktionell kritischen Bereichen des Zuluftkamins zu erzielen. Hierbei wird einerseits verhindert, dass der Bauraum für die zweite Drosselvorrichtung die Regel- oder Stellvorgänge der ersten Drosselvorrichtung beeinträchtigt, andererseits verhindert, dass dieser Bauraum über den Querschnitt der Austrittsöffnung des ersten Luftkanalabschnitts hinausragt und folglich einen Kontakt der zweiten Drosselvorrichtung mit dem Mischbereich zwischen Stallluft und Außenluft zur Folge hätte.

Der erfindungsgemäße Zuluftkamin kann insbesondere nach einem Verfahren zur Belüftung eines Nutztierstalles betrieben werden, welches die Schritte aufweist:
- Zuführen von Außenluft durch eine Einlassöffnung,
- Dosieren der Menge der zugeführten Außenluft mittels einer Drosselklappe, indem die Drosselklappe auf eine Position zwischen einer ersten Stellung, in der sie den ersten Luftkanalabschnitt absperrt in eine zweite Stellung, in der sie den ersten Luftkanalabschnitt freigibt, verschwenkt wird,
- Versetzen des durch die Drosselklappe gedrosselten Außenluftstroms in eine Drallbewegung um eine sich in Strömungsrichtung erstreckende Achse,
- Zumischen von Stallluft in die sich drallförmig bewegende Außenluft in einem Mischbereich,
- Befördern der Mischung aus Stallluft und Außenluft durch eine Fördervorrichtung hindurch zu einer Luftaustrittsöffnung.

Mit dem solcherart definierten Verfahren ist eine besonders wirksame Belüftungsweise eines Nutztierstalles sowohl bei gemäßigten Außentemperaturen als auch bei tiefen Außentemperaturen möglich.

Das Verfahren kann fortgebildet werden, indem die Stallluft in den Mischraum durch eine Stalllufteinlassöffnung eintritt und der Mischraum von der Stalllufteinlassöffnung umgeben wird. Mit dieser Fortbildung wird eine Eisbildung in funktionell entscheidenden Bereichen der für die Belüftung notwendigen Vorrichtung zuverlässig verhindert.

Eine bevorzugte Ausführungsform wird anhand der Figuren beschrieben. Es zeigen:
- Fig. 1: eine längsgeschnittene Seitenansicht eines erfindungsgemäßen Zuluftkamins in Sommerstellung,
- Fig. 2: eine Ansicht gemäß Fig. 1 in Winterstellung,
- Fig. 3: eine Ansicht gemäß Fig. 1 in Umluftstellung, und
- Fig. 4: eine Unteransicht auf die Austrittsöffnungen des oberen Luftkanalabschnitts gemäß den Ansichtlinien A-A in Fig. 2.

Die in den Figuren gezeigte Ausführungsform weist einen oberen Luftkanalabschnitt 10 auf, der sich senkrecht durch eine Öffnung in einem Dach 1 erstreckt und mittels Befestigungselementen 2 an diesem Dach befestigt ist.

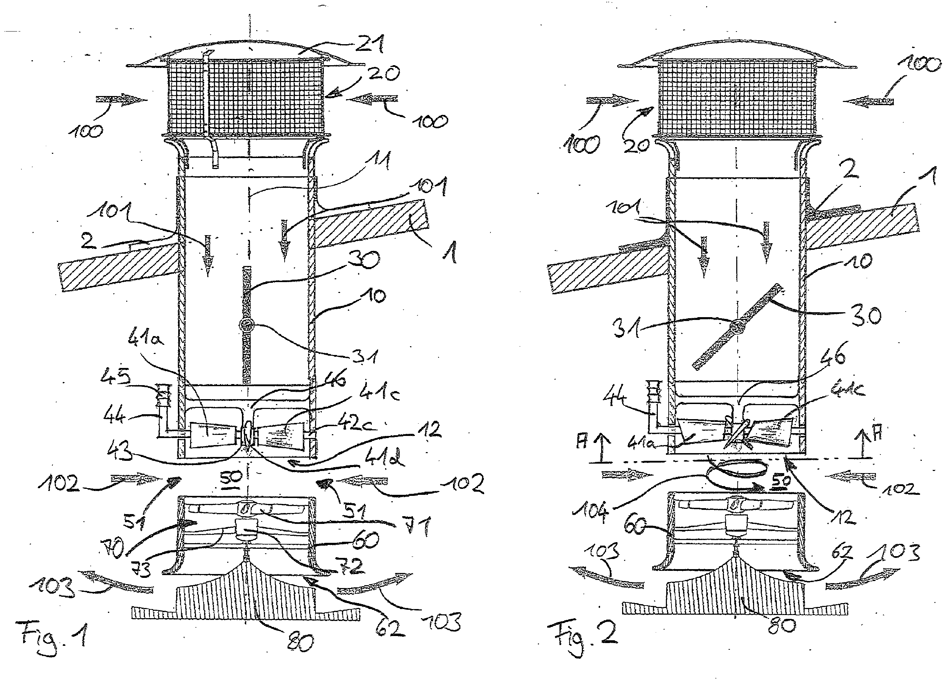

Am oberen Ende des oberen Luftkanalabschnitts 10 ist ein umfänglich laufendes Einlassgitter 20 ausgebildet, welches die Außenlufteinlassöffnung darstellt und gegen Witterungseinflüsse durch eine Dachabdeckung 21 geschützt ist. Durch diese Außenlufteinlassöffnung strömt Luft gemäß den Pfeilen 100 in Fig. 1 und 2 in den Innenraum des Zuluftkamins hinein.

Im oberen Luftkanalabschnitt 10 ist in Strömungsrichtung hinter der Einlassöffnung 20 in dem im Gebäudeinneren liegenden Teil des Luftkanalabschnitts 10 eine Drosselklappe 30 angeordnet. Die Drosselklappe 30 ist um eine zentrale Schwenkachse 31 schwenkbar gelagert. Die Schwenkachse 31 liegt senkrecht zur Längsachse 11 des Zuluftkamins. In Fig. 1 ist die Drosselklappe 30 in einer voll geöffneten Stellung gezeigt.

In Strömungsrichtung hinter dem Schwenkbereich der Drosselklappe 30 ist ein Sterndiffusor 40 mit vier verschwenkbaren Luftleitklappen 41 a-d im oberen Luftkanalabschnitt angeordnet.

Die Luftleitklappen 41 b-d sind an ihrem radial außen liegenden Ende in der Wandung des oberen Luftkanalabschnitts 10 mittels eines Zapfens 42 b-d drehbar gelagert. Es ist zu verstehen, dass diese drehbare Lagerung auch alternativ in einem Einsatzring ausgeführt sein kann, der in das Gehäuse des Luftkanalabschnitts eingesetzt ist.

Darüber hinaus ist jede Luftleitklappe an ihrem radial innen liegenden Ende in einem Getriebegehäuse 43 schwenkbar gelagert. Durch die Lagerungen im Getriebegehäuse 43 und der Zapfen 42 b-d wird für jede Luftleitklappe eine sich in ihrer Längsrichtung und senkrecht zur Längsachse des Zuluftkamins erstreckende Schwenkachse definiert.

Die Luftleitklappe 41 a weist anstelle eines radial außen liegenden Zapfens 42 a einen abgewinkelten Hebel 44 auf, der außen liegend vom oberen Luftkanalabschnitt ist und an seinem abgewinkelten Ende einen Griff 45 trägt. Mittels des abgewinkelten Hebels 44 und des Griffes 45 kann die Luftleitklappe 41 a um ihre Längsachse verschwenkt werden. Diese Verschwenkbewegung wird in dem Getriebe 43 entsprechend auf die anderen Luftleitklappen 41 b-d übertragen und diese werden synchron zur Luftleitklappe 41 a mitverschwenkt. Auf diese Weise können die Luftleitklappen 41 a-d aus einer in Fig. 1 gezeigten Sommerstellung, in der die Luftleitklappen parallel zu dem Luftstrom 101 durch den oberen Luftkanalabschnitt liegen, in eine Winterstellung gemäß Fig. 2 verschwenkt werden. In der Winterstellung sind die Luftleitklappen schräg in Bezug auf den Luftstrom 101 angeordnet und versetzen diesen Luftstrom in eine schraubenförmige Drallbewegung um die Längsachse 11 des Zuluftkamins.

Das Getriebe 43 ist mittels einer Vertrebung 46 im unteren Endabschnitt des oberen Luftkanabschnitts befestigt.

Die durch den oberen Luftkanalabschnitt 10 strömende Luft 101 tritt, nachdem sie die Drosselklappe 30 und die Luftleitklappen 41 a-d passiert hat, aus einer Austrittsöffnung 12 aus dem oberen Luftkanalabschnitt in einen Mischraum 50 ein. Der Mischraum 50 liegt zwischen dem oberen Luftkanalabschnitt 10 und einem unteren Luftkanalabschnitt 60. Der untere Luftkanalabschnitt 60 ist mittels Streben (nicht dargestellt) mit dem oberen Luftkanalabschnitt 10 verbunden.

Um den Mischraum 50 ist eine allseitig als Ringspalt aufgeführte Stalllufteintrittsöffnung 51 ausgebildet, durch welche Stallluft in einer Strömungsrichtung 102 radial einwärts gerichtet eintreten kann.

Die aus der Austrittsöffnung 12 austretende Außenluft vermischt sich im Mischraum 50 mit der durch den Einlassspalt 51 eintretenden Stallluft. Die so vermischte Luft wird mittels eines Ventilators 71, der als Sauggebläse 70 wirkt und von einem Motor 72 angetrieben wird, in den unteren Luftkanalabschnitt 60 hineingesogen. Der Motor 72 ist in Strömungsrichtung hinter dem Ventilator 71 angeordnet und mittels Streben 73 mit der Außenwand des unteren Luftkanalabschnitts 60 verbunden.

Die durch den unteren Luftkanalabschnitt 60 hindurchströmende Mischluft aus Stall- und Außenluft wird aus einer Austrittsöffnung 62 abgegeben und trifft auf eine unterhalb dieser Austrittsöffnung 62 angeordnete Luftleitplatte 80. Die Luftleitplatte 80 lenkt die Luft aus ihrer vertikalen Ausströmungsrichtung aus dem unteren Luftkanalabschnitt 60 in eine horizontale, leicht schräg aufwärts gerichtete Luftströmung 103 um und bewirkt somit eine im Wesentlichen horizontale Einströmung der solcherart gemischten Luft in den Innenraum des Stallgebäudes.

Fig. 2 zeigt die Ausführungsform gemäß Fig. 1 in einer Winterstellung. In dieser Winterstellung ist durch Verschwenkung der Drosselklappe 30 die Außenluftzufuhr gedrosselt, sodass der horizontal ausströmenden Luft 103 ein höherer Anteil an Stallluft 102 beigefügt ist als in dem in Fig. 1 dargestellten Sommerbetrieb. Die Luftleitklappen 41 a-d sind gegenüber der in Fig. 1 dargestellten Position, in der sie parallel zur Luftströmung 101 durch den oberen Luftkanalabschnitt ausgerichtet sind, verschwenkt und liegen nun schräg zu dieser Luftströmung 101. Aufgrund der radialen Anordnung und einer jeweils winkelgleichen Verschwenkung der Luftleitklappen um ihre jeweilige Längsachse wird hierdurch ein Drall der aus der Austrittsöffnung 12 austretenden Außenluft bewirkt und hierdurch eine gute Vermischung dieser Außenluft mit der Stallluft 102 im Mischraum 50 erzeugt. Zugleich wird durch diesen Drall 104 eine Rückströmung von Stallluft oder Außenluft in die Austrittsöffnung 12 aus dem Mischraum 50 zuverlässig verhindert.

Die solcherart in eine drallförmige Bewegung versetzte Außenluft tritt nach Durchmischung mit der Stallluft 102 in gleicher Weise wie zuvor in den unteren Luftkanalabschnitt 60 ein und wird als horizontal ausströmende Frischluft 103 in das Stallgebäude abgegeben.

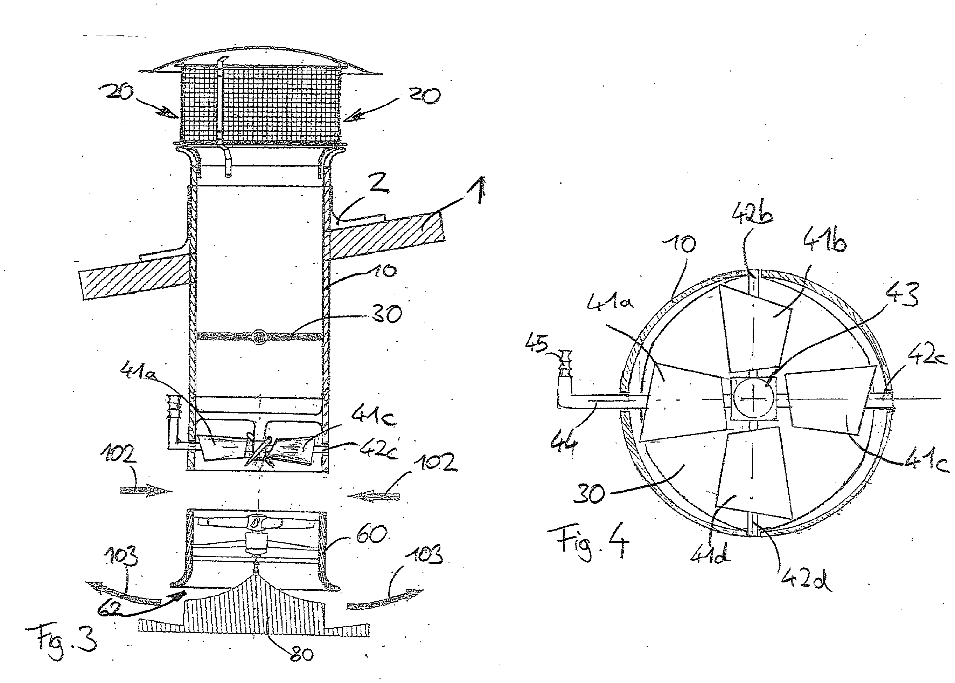

Fig. 3 zeigt einen dritten Betriebszustand, in dem durch die Drosselklappe 30 ein vollständiger Verschluss des Luftkanalabschnitts bewirkt wird. In dieser Drosselklappenstellung ist die Verschwenkung der Luftleitklappen 41 a-d ohne Bedeutung für die Funktion des Zuluftkamins, da in diesem Fall keine Außenluft den oberen Luftkanalabschnitt durchströmt.

Stattdessen wird in dieser Funktionsstellung eine reine Luftumwälzung erzielt, indem lediglich Stallluft 102 angesaugt, durch den unteren Luftkanalabschnitt 60 geführt und als horizontal ausströmende Luft 103 wieder abgegeben wird.

Die Ansicht gemäß Fig. 4 verdeutlicht die Anordnung der Luftleitklappen 41 a-d und deren Lagerung und Steuerung über den Schwenkhebel 44 sowie die Zapfen 42 b-d. Es ist dabei zu verstehen, dass anstelle der hier gezeigten vier Luftleitklappen auch nur eine einzige Luftleitklappe vorgesehen sein kann, um durch diese eine Drallwirkung in der Strömung zu erzielen. In gleicher Weise können auch mehr als eine Luftleitklappe vorgesehen sein, insbesondere können die Luftleitklappen auch so angeordnet sein, dass sie in einer Verschwenkungsstellung, in der sie senkrecht zur Durchströmungsrichtung des Luftkanalabschnitts stehen, den gesamten Querschnitt des Luftkanalabschnitts abdecken.

## Patentansprüche

1. Zuluftkamin zur Belüftung von Nutztierställen, umfassend:
- eine Außenlufteinlassöffnung (20),
- eine Luftaustrittsöffnung (62),
- einen Luftkanal (10, 60), welcher sich entlang einer Längsachse (11) des Zuluftkamins erstreckt und die Außenlufteinlassöffnung mit der Luftaustrittsöffnung verbindet, mit
• einem ersten Luftkanalabschnitt (10), der sich in Strömungsrichtung der Außenluft von der Außenlufteinlassöffnung zu einer Stallufteinlassöffnung (51) erstreckt und
• einem zweiten Luftkanalabschnitt (60), der sich in Strömungsrichtung von der Stallufteinlassöffnung (51) zu der Luftaustrittsöffnung (62) erstreckt,
- einen Luftförderer (70), der innerhalb des zweiten Luftkanalabschnitts angeordnet ist und zur Förderung von Luft aus dem Stallufteinlassöffnung und dem ersten Luftkanalabschnitt zu der Luftaustrittsöffnung ausgebildet ist, **gekennzeichnet durch** eine erste Drosselvorrichtung (30, 31), die eine Drosselklappe (30) umfasst, die zwischen einer ersten Stellung, in der sie den ersten Luftkanalabschnitt absperrt in eine zweite Stellung, in der sie den ersten Luftkanalabschnitt freigibt bewegbar, insbesondere verschwenkbar ist, und eine zweite Drosselvorrichtung (41 a-d), die in dem ersten Luftkanalabschnitt in Strömungsrichtung hinter der ersten Drosselvorrichtung angeordnet ist und zumindest ein oder mehrere Luftleitelemente (41 a-d) umfasst, die in einer ersten Stellung angeordnet sind, um die durch die zweite Drosselvorrichtung hindurchtretende Luft in eine schraubenförmige Bewegung um die Längsachse des Zuluftkamins zu versetzen.

2. Zuluftkamin nach Anspruch 1,
**dadurch gekennzeichnet, dass** die Drosselklappe aus der ersten in die zweite Stellung um eine Achse schwenkbar gelagert ist, die senkrecht zur Luftströmungsrichtung durch den ersten Luftkanalabschnitt verläuft.

3. Zuluftkamin nach Anspruch 1 und 2,
**dadurch gekennzeichnet, dass** jedes Luftleitelement aus der ersten Stellung in eine zweite Stellung verschwenkbar ist, in welcher der Strömungswiderstand der zweiten Drosselvorrichtung geringer ist als in der ersten Stellung.

4. Zuluftkamin nach einem der vorhergehenden Ansprüche ,
**dadurch gekennzeichnet, dass** die Luftleitelemente der zweiten Drosselvorrichtung als Luftleitklappen ausgebildet sind und sich ausgehend von der Längsachse des Zuluftkamins in einer Ebene senkrecht zur Längsachse radial zur Wandung des Luftkanals erstrecken.

5. Zuluftkamin nach Anspruch 4,
**dadurch gekennzeichnet, dass** jede Luftleitklappe um jeweils eine radial verlaufende Achse aus der ersten Stellung in eine zweite Stellung verschwenkbar ist, in welcher der Strömungswiderstand der zweiten Drosselvorrichtung geringer ist als in der ersten Stellung.

6. Zuluftkamin nach Anspruch 4 oder 5,
**dadurch gekennzeichnet, dass** jedes Luftleitelement eine sich von innen nach radial außen vergrößernde Breite aufweist.

7. Zuluftkamin nach einem der vorhergehenden Ansprüche,
**gekennzeichnet durch** eine Luftleitplatte, die in Strömungsrichtung hinter der Luftaustrittsöffnung (62) angeordnet ist und die durch den zweiten Luftkanalabschnitt strömende Luft nach radial auswärts, vorzugsweise nach allseitig radial auswärts umlenkt.

8. Zuluftkamin nach einem der vorhergehenden Ansprüche 1-6,
**gekennzeichnet durch** eine Luftverteilervorrichtung, die in Strömungsrichtung hinter der Luftauslassöffnung angeordnet ist und die durch den zweiten Luftkanalabschnitt strömende Luft in eine Vielzahl von Luftleitrohren verteilt.

9. Zuluftkamin nach einem der vorhergehenden Ansprüche,
**gekennzeichnet durch** einen Luftmischbereich, der innerhalb der Stallufteinlassöffnung angeordnet ist und in den Außenluft aus dem ersten Luftkanalabschnitt durch die zweite Drosselvorrichtung in axialer Richtung einströmen kann und **dadurch gekennzeichnet, dass** die Stallufteinlassöffnung als ringförmiger Spalt ausgebildet ist, durch den Stallluft radial einwärts in den Luftmischbereich eintreten kann und dort mit der Außenluft aus dem ersten Luftkanalabschnitt vermischt wird.

10. Zuluftkamin nach einem der vorhergehenden Ansprüche,
**dadurch gekennzeichnet, dass** die Stallufteinlassöffnung zwischen einer Auslassöffnung des ersten Luftkanalabschnitts und einer Einlassöffnung des zweiten Luftkanalabschnitts angeordnet ist.

11. Zuluftkamin nach einem der vorhergehenden Ansprüche,
**dadurch gekennzeichnet, dass** der Luftförderer einen Ventilator und einen den Ventilator in eine Rotationsbewegung um eine parallel, vorzugsweise koaxial zur Längsachse des Zuluftkamins liegende Rotationsachse versetzenden Motor umfasst, der in Strömungsrichtung hinter der Ebene, in welcher der Ventilator rotiert, angeordnet ist.

12. Modulsystem für einen Zuluftkamin, umfassend
ein erstes Luftkanalabschnittelement,
ein zweites Luftkanalabschnittelement, das mittels Verbindungselementen mit dem ersten Luftkanalabschnitt so mechanisch verbunden werden kann, dass zwischen dem ersten und zweiten Luftkanalanschnittelement eine Stallufteinlassöffnung ausgebildet ist,
- einen Luftförderer, der innerhalb des zweiten Luftkanalabschnitts angeordnet ist und zur Förderung von Luft aus der Stallufteinlassöffnung und dem ersten Luftkanalabschnitt zu der Luftaustrittsöffnung ausgebildet ist,
**dadurch gekennzeichnet, dass** das erste Luftkanalabschnittelement ausgebildet ist, um in seinem Innenraum
- eine erste Drosselvorrichtung, die eine Drosselklappe umfasst, die zwischen einer ersten Stellung, in der sie den ersten Luftkanalabschnitt absperrt in eine zweite Stellung, in der sie den ersten Luftkanalabschnitt freigibt bewegbar, insbesondere verschwenkbar ist, und
- eine zweite Drosselvorrichtung , die in dem ersten Luftkanalabschnitt in Strömungsrichtung hinter der ersten Drosselvorrichtung angeordnet ist und eine Mehrzahl von Luftleitelementen umfasst, die in einer ersten Stellung angeordnet sind, um die durch die zweite Drosselvorrichtung hindurchtretende Luft in eine schraubenförmige Bewegung um die Längsachse des Zuluftkamins zu versetzen,
aufzunehmen.

13. Modulsystem nach Anspruch 12,
**dadurch gekennzeichnet, dass** das erste Luftkanalabschnittelement eine Austrittsöffnung aufweist, durch welche Luft aus dem ersten Luftkanalabschnittelement in einen von der Stallufteinlassöffnung umgebenenen Luftmischraum strömt und eine solche Länge aufweist, dass zwischen dem Verschwenkungsbereich ersten Drosselvorrichtung und der Querschnittsebene der Austrittsöffnung die zweite Drosselvorrichtung eingebaut werden kann.

14. Verfahren zu Belüftung eines Nutztierstalles, mit den Schritten:
- Zuführen von Außenluft durch eine Außenlufteinlassöffnung,
- Dosieren der Menge der zugeführten Außenluft mittels einer Drosselklappe, indem die Drosselklappe zwischen einer ersten Stellung, in der sie einen ersten Luftkanalabschnitt absperrt in eine zweite Stellung, in der sie den ersten Luftkanalabschnitt freigibt hin und her verschwenkt wird,
- Versetzen des durch die Drosselklappe gedrosselten Außenluftstroms in eine Drallbewegung um eine sich in Strömungsrichtung erstreckende Längsachse,
- Zumischen von Stallluft in die sich drallförmig bewegende Außenluft in einem Mischbereich,
- Befördern der Mischung aus Stallluft und Außenluft durch eine Fördervorrichtung hindurch zu einer Luftaustrittsöffnung.

15. Verfahren nach Anspruch 14,
**dadurch gekennzeichnet, dass** die Stallluft in den Mischraum durch eine Stallufteinlassöffnung eintritt und der Mischraum vom Stallufteinlassöffnung umgeben wird.

## Claims

1. Fresh air chimney for ventilating livestock barns, comprising:
- an outside air inlet orifice (20),
- an air outlet orifice (62),
- an air duct (10, 60) which extends along a longitudinal axis (11) of the fresh air chimney and connects the outside air inlet orifice with the air outlet orifice, having
• a first air duct section (10) extending in the flow direction of the outside air from the outside air inlet orifice to a barn air inlet orifice (51) and
• a second air duct section (60) extending in the flow direction from the barn air inlet orifice (51) to the air outlet orifice (62),
- an air conveyor (70) which is disposed inside the second air duct section and configured to convey air from the barn air inlet orifice and first air duct section to the air outlet orifice,
**characterised by** a first throttle device (30, 31) comprising a throttle valve (30) which can be moved, in particular pivoted, between a first position in which it shuts off the first air duct section and a second position in which it opens the first air duct section, and a second throttle device (41 a-d) which is disposed in the first air duct section downstream of the first throttle device in the flow direction and comprises at least one or more air deflector elements (41 a-d) which are disposed in a first position in order to move the air passing through the second throttle device in a helical motion about the longitudinal axis of the fresh air chimney.

2. Fresh air chimney as claimed in claim 1,
**characterised in that** the throttle valve is mounted so as to be pivotable from the first into the second position about an axis extending through the first air duct section perpendicular to the air flow direction.

3. Fresh air chimney as claimed in claim 1 and 2,
**characterised in that** every air deflector element is pivotable from the first position into a second position in which the flow resistance of the second throttle device is lower than in the first position.

4. Fresh air chimney as claimed in one of the preceding claims,
**characterised in that** the air deflector elements of the second throttle device are configured as air deflector flaps and extend radially to the wall of the air duct from the longitudinal axis of the fresh air chimney in a plane perpendicular to the longitudinal axis.

5. Fresh air chimney as claimed in claim 4,
**characterised in that** every air deflector flap is pivotable respectively about a radially extending axis from the first position into a second position in which the flow resistance of the second throttle device is lower than in the first position.

6. Fresh air chimney as claimed in claim 4 or 5,
**characterised in that** every air deflector element becomes larger in width from the inside radially outwards.

7. Fresh air chimney as claimed in one of the preceding claims,
**characterised by** an air deflector plate which is disposed downstream of the air outlet orifice (62) in the flow direction and which deflects the air flowing through the second air duct section radially outwards, preferably radially outwards on all sides.

8. Fresh air chimney as claimed in one of preceding claims 1-6,
**characterised by** an air distributor device which is disposed downstream of the air outlet orifice in the flow direction and which distributes the air flowing through the second air duct section to a plurality of air deflector pipes.

9. Fresh air chimney as claimed in one of the preceding claims,
**characterised by** an air mixing region which is disposed inside the barn air inlet orifice and into which outside air from the first air duct section is able to flow in the axial direction through the second throttle device, and **characterised in that** the barn air inlet orifice is configured as an annular gap through which barn air is able to flow radially inwards into the air mixing region, where it is mixed with the outside air from the first air duct section.

10. Fresh air chimney as claimed in one of the preceding claims,
**characterised in that** the barn air inlet orifice is disposed between an outlet orifice of the first air duct section and an inlet orifice of the second air duct section.

11. Fresh air chimney as claimed in one of the preceding claims,
**characterised in that** the air conveyor comprises a fan and a motor moving the fan in a direction of rotation about an axis of rotation lying parallel with, preferably coaxially with, the longitudinal axis of the fresh air chimney, which is disposed downstream of the plane in which the fan rotates in the flow direction.

12. Module system for a fresh air chimney, comprising
a first air duct section element,
a second air duct section element which can be mechanically connected to the first air duct section element by connecting elements so that a barn air inlet orifice is formed between the first and second air duct section elements,
- an air conveyor which is disposed inside the second air duct section and configured to convey air out of the barn air inlet orifice and first air duct section to the air outlet orifice,
**characterised in that** the first air duct section element is configured to accommodate in its interior
- a first throttle device comprising a throttle valve which can be moved, in particular pivoted, between a first position in which it shuts off the first air duct section and a second position in which it opens the first air duct section, and
- a second throttle device which is disposed in the first air duct section downstream of the first throttle device in the flow direction and comprises a plurality of air deflector elements disposed in a first position in order to move the air passing through the second throttle device in a helical motion about the longitudinal axis of the fresh air chimney.

13. Module system as claimed in claim 12,
**characterised in that** the first air duct section element has an outlet orifice through which air from the first air duct section element flows to an air mixing chamber surrounded by the barn air inlet orifice and which is of such a length that the second throttle device can be integrated between the pivoting region of the first throttle device and the cross-sectional plane of the outlet orifice.

14. Method for ventilating a livestock barn, comprising the steps:
- feeding in outside air through an outside air inlet orifice,
- metering the quantity of outside air fed in by means of a throttle valve by pivoting the throttle valve backwards and forwards between a first position in which it shuts off a first air duct section and a second position in which it opens the first air duct section,
- moving the outside air flow throttled by the throttle valve in a swirling motion about a longitudinal axis extending in the flow direction,
- admixing barn air in the outside air moving in a swirling motion in a mixing region,
- conveying the mixture of barn air and outside air by a conveyor device through to an air outlet orifice.

15. Method as claimed in claim 14,
**characterised in that** the barn air enters the mixing chamber through a barn air inlet orifice and the mixing chamber is surrounded by the barn air inlet orifice.

## Revendications

1. Cheminée d'amenée d'air pour la ventilation d'écuries pour bétail, comprenant :
- une ouverture d'entrée d'air extérieur (20),
- une ouverture de sortie d'air (62),
- un canal d'air (10, 60) qui s'étend le long d'un axe longitudinal (11) de la cheminée d'amenée d'air et raccorde l'ouverture d'entrée d'air extérieur avec l'ouverture de sortie d'air, avec
-- une première section de canal d'air (10) qui s'étend, dans le sens d'écoulement de l'air extérieur, de l'ouverture d'entrée d'air extérieur à une ouverture d'entrée d'air d'écurie (51) et
-- une seconde section de canal d'air (60) qui s'étend, dans le sens d'écoulement, de l'ouverture d'entrée d'air d'écurie (51) à l'ouverture de sortie d'air (62),
- un transporteur d'air (70) qui est disposé dans la seconde section de canal d'air et est réalisé pour le transport d'air de l'ouverture d'entrée d'air d'écurie et de la première section de canal d'air à l'ouverture de sortie d'air,
**caractérisée par** un premier dispositif d'étranglement (30, 31) qui comprend un volet d'étranglement (30) qui est mobile, en particulier peut être pivoté, entre une première position, dans laquelle il bloque la première section de canal d'air, à une seconde position, dans laquelle il libère la première section de canal d'air, et un second dispositif d'étranglement (41 a-d) qui est disposé dans la première section de canal d'air dans le sens d'écoulement derrière le premier dispositif d'étranglement et comprend au moins un ou plusieurs éléments de conduite d'air (41 a-d) qui sont disposés dans une première position pour amener l'air passant au travers du second dispositif d'étranglement en un mouvement hélicoïdal autour de l'axe longitudinal de la cheminée d'amenée d'air.

2. Cheminée d'amenée d'air selon la revendication 1,
**caractérisée en ce que** le volet d'étranglement est logé de manière pivotante de la première à la seconde position autour d'un axe qui s'étend perpendiculairement au sens d'écoulement d'air au travers de la première section de canal d'air.

3. Cheminée d'amenée d'air selon les revendications 1 et 2,
**caractérisée en ce que** chaque élément de conduite d'air peut être pivoté de la première position à une seconde position, dans laquelle la résistance à l'écoulement du second dispositif d'étranglement est plus faible que dans la première position.

4. Cheminée d'amenée d'air selon l'une quelconque des revendications précédentes,
**caractérisée en ce que** les éléments de conduite d'air du second dispositif d'étranglement sont réalisés en tant que volets de conduite d'air et s'étendent à partir de l'axe longitudinal de la cheminée d'amenée d'air dans un plan perpendiculairement à l'axe longitudinal radialement à la paroi du canal d'air.

5. Cheminée d'amenée d'air selon la revendication 4,
**caractérisée en ce que** chaque volet de conduite d'air peut être pivoté autour de respectivement un axe s'étendant radialement de la première position à une seconde position, dans laquelle la résistance à l'écoulement du second dispositif d'étranglement est plus faible que dans la première position.

6. Cheminée d'amenée d'air selon la revendication 4 ou 5,
**caractérisée en ce que** chaque élément de conduite d'air présente une largeur augmentant de l'intérieur vers l'extérieur radialement.

7. Cheminée d'amenée d'air selon l'une quelconque des revendications précédentes,
**caractérisée par** une plaque de conduite d'air qui est disposée dans le sens d'écoulement derrière l'ouverture de sortie d'air (62) et dévie l'air s'écoulant au travers de la seconde section de canal d'air radialement vers l'extérieur, de préférence radialement de tous les côtés vers l'extérieur.

8. Cheminée d'amenée d'air selon l'une quelconque des revendications précédentes 1 à 6,
**caractérisée par** un dispositif de distribution d'air qui est disposé dans le sens d'écoulement derrière l'ouverture de sortie d'air et distribue l'air s'écoulant au travers de la seconde section de canal d'air dans une pluralité de tubes de conduite d'air.

9. Cheminée d'amenée d'air selon l'une quelconque des revendications précédentes,
**caractérisée par** une zone de mélange d'air qui est disposée dans l'ouverture d'entrée d'air d'écurie et peut affluer dans l'air extérieur de la première section de canal d'air au travers du second dispositif d'étranglement dans le sens axial et **caractérisée en ce que** l'ouverture d'entrée d'air d'écurie est réalisée en tant que fente annulaire par laquelle de l'air d'écurie peut entrer radialement vers l'intérieur dans la zone de mélange d'air et y est mélangé avec l'air extérieur de la première section de canal d'air.

10. Cheminée d'amenée d'air selon l'une quelconque des revendications précédentes,
**caractérisée en ce que** l'ouverture d'entrée d'air d'écurie est disposée entre une ouverture de sortie de la première section de canal d'air et une ouverture d'entrée de la seconde section de canal d'air.

11. Cheminée d'amenée d'air selon l'une quelconque des revendications précédentes,
**caractérisée en ce que** le transporteur d'air comprend un ventilateur et un moteur amenant le ventilateur dans un mouvement de rotation autour d'un axe de rotation se trouvant parallèlement, de préférence coaxialement, à l'axe longitudinal de la cheminée d'amenée d'air qui est disposé dans le sens d'écoulement derrière le plan dans lequel le ventilateur tourne.

12. Système modulaire pour une cheminée d'amenée d'air comprenant
un premier élément de section de canal d'air,
un second élément de section de canal d'air qui peut être raccordé au moyen d'éléments de raccordement à la première section de canal d'air mécaniquement de sorte qu'une ouverture d'entrée d'air d'écurie soit réalisée entre les premier et second éléments de section de canal d'air,
- un transporteur d'air qui est disposé dans la seconde section de canal d'air et est réalisé pour le transport d'air de l'ouverture d'entrée d'air d'écurie et la première section de canal d'air à l'ouverture de sortie d'air,
**caractérisé en ce que** le premier élément de section de canal d'air est réalisé pour recevoir dans son espace intérieur
- un premier dispositif d'étranglement qui comprend un volet d'étranglement qui est mobile, en particulier est pivotant, entre une première position, dans laquelle il bloque la première section de canal d'air, à une seconde position, dans laquelle il libère la première section de canal d'air, et
- un second dispositif d'étranglement qui est disposé, dans la première section de canal d'air, dans le sens d'écoulement derrière le premier dispositif d'étranglement et comprend une pluralité d'éléments de conduite d'air qui sont disposés dans une première position pour amener l'air passant au travers du second dispositif d'étranglement dans un mouvement hélicoïdal autour de l'axe longitudinal de la cheminée d'amenée d'air.

13. Système modulaire selon la revendication 12, **caractérisé en ce que** le premier élément de section de canal d'air présente une ouverture de sortie au travers de laquelle de l'air s'écoule du premier élément de section de canal d'air dans un espace de mélange d'air entouré par l'ouverture d'entrée d'air d'écurie et présente une telle longueur que le second dispositif d'étrangement puisse être intégré entre la zone de pivotement du premier dispositif d'étranglement et le plan de section transversale de l'ouverture de sortie.

14. Procédé de ventilation d'une écurie pour bétail avec les étapes suivantes :
- l'amenée d'air extérieur au travers d'une ouverture d'entrée d'air extérieur,
- le dosage de la quantité de l'air extérieur amenée au moyen d'un volet d'étranglement en ce que le volet d'étranglement est pivoté alternativement entre une première position, dans laquelle il bloque une première section de canal d'air, à une seconde position, dans laquelle il libère la première section de canal d'air,
- l'amenée du courant d'air extérieur étranglé par le volet d'étranglement dans un mouvement de torsion autour d'un axe longitudinal s'étendant dans le sens d'écoulement,
- le mélange d'air d'écurie dans l'air extérieur se déplaçant en forme de torsion dans une zone de mélange,
- le transport du mélange de l'air d'écurie et de l'air extérieur au travers d'un dispositif de transport vers une ouverture de sortie d'air.

15. Procédé selon la revendication 14, **caractérisé en ce que** l'air d'écurie entre dans l'espace de mélange au travers d'une ouverture d'entrée d'air d'écurie et l'espace de mélange est entouré par l'ouverture d'entrée d'air d'écurie.
